# EUROPEAN PATENT APPLICATION

(11) **EP 4 845 050 A1**
(43) Date of publication of application: **25.11.2026**
(21) Application number: 26179822.7
(22) Date of filing: 20.05.2026
(51) Int. Cl.: H04B 7/06, H04B 1/10, H04B 7/08

(54) **AN EFFICIENT ARCHITECTURE FOR BEAMFORMING-ENABLED SIMULTANEOUS TRANSMIT AND RECEIVE (STAR) SYSTEMS**

(30) Priority: 22.05.2025 US 202519215566
(71) Applicant: L3Harris Technologies, Inc., Melbourne, FL 32919 (US)
(72) Inventor: BLACK, Richard Allen, Melbourne, 32919 (US); HADDADIN, Osama S., Melbourne, 32919 (US); RAMIREZ, Maria Luisa, Melbourne, 32919 (US); GUNN, Brian, Melbourne, 32919 (US)
(74) Representative: Schmidt, Steffen J.

(57) **Abstract**

Example embodiments provide an apparatus for a beamforming-enabled simultaneous transmit and receive (STAR) system. A receiver is configured, based on one or more received radio frequency (RF) signals, to provide one or more received baseband signals in a time domain that each includes a signal of interest and interference including an interference signal from one or more transmitters corresponding to the STAR system. Each interference signal is associated with an interference reference signal. Beam processing circuitry operating in the frequency domain provides a beam signal. Interference cancellation circuitry also operating in the frequency domain removes one or more interference reference signals to provide a signal of interest. Transform conversions back and forth between time and frequency domains are eliminated, and only one set of FFTs at the beginning of beamforming and interference cancellation and one set of IFFTs at the end is needed resulting in a more efficient STAR system.

## Description

### INTRODUCTION

In various systems that transmit and receive electromagnetic waves, such as communications systems or radar systems, it may be useful to transmit and receive simultaneously. This operation is known as simultaneous transmit and receive (STAR). Traditionally, transmitting and receiving at the same frequency at the same time is one way to optimize use of available bandwidth (e.g., doubling spectrum efficiency) and increase network throughput. More generally, STAR also includes multiple systems causing interference with each other and have access to a reference signal. Transmitting and receiving at the same frequency and/or interference can present challenges due to coupling of a transmitted signal into the receiver, and other types of in-band self-interference (SI), such as leakage, as well as interference from nearby transmitters, all of which can interfere with receiver operation. This interference also often can be stronger than a desired signal being received and can reduce the receiver's dynamic range.

A self-interference cancellation ("SIC") filter may be used to reduce self-interference effects by inverting, phase shifting, and/or otherwise modifying the STAR transmit signal received as input to the filter to generate an inverse signal that, when injected into the STAR receive chain effectively cancels or at least reduces self-interference effects. Both a digital SIC filter and an analog SIC filter can be used to cooperate such that any interference not canceled by the analog SIC filter in the analog domain can be canceled by the digital SIC filter in the digital domain. Alternatively, digital SIC filtering may be implemented without analog SIC filtering and vice versa.

When multiple receive elements are available, receiver beamforming is an approach often used for the spatial isolation of signals in the far field. Beamforming may also be used to isolate the desired receive signal from the self-interference signal, thus contributing to SIC. Beamforming (BF) may also be used to mitigate other interferences in addition to interference caused by a STAR transmit signal.

The inventors recognized that known STAR systems with digital beamforming and digital SIC filtering are computationally or resource inefficient, and that improvements in the efficiency and reduction in the computational complexity of STAR systems with both SIC digital beamforming and SIC digital filtering are desired.

### SUMMARY

First example embodiments provide an apparatus for a beamforming-enabled simultaneous transmit and receive (STAR) system. A receiver is configured, based on one or more received radio frequency (RF) signals, to provide one or more received baseband signals in a time domain that each includes a signal of interest and interference including an interference signal from one or more transmitters corresponding to the STAR system. Each interference signal is associated with an interference reference signal. Beam processing circuitry is configured to convert the one or more received baseband signals in the time domain into one or more received baseband signals in a frequency domain and multiply a corresponding set of beamforming coefficients with each received baseband signal in the frequency domain to provide a beam signal in the frequency domain. Interference cancellation circuitry is configured to convert each interference reference signal in the time domain to an interference reference signal in the frequency domain, multiply each interference reference signal in the frequency domain with a corresponding set of frequency domain cancellation coefficients to provide an interference cancellation signal in the frequency domain, combine the beam signal in the frequency domain with each interference cancellation signal in the frequency domain to remove each interference reference signal and provide a signal of interest in the frequency domain, convert the signal of interest in the frequency domain into a signal of interest in the time domain corresponding to the beam signal, and output the signal of interest in the time domain.

Advantageously for the first example embodiments, there is no need to convert beam signals generated by beamforming circuitry in the frequency domain to the time domain before providing the beam signals to the interference cancellation circuitry. Instead, the frequency domain beam signals are provided to the interference cancellation circuitry with interference cancellation operations continuing in the frequency domain without the interference cancellation circuitry having to convert beam signals in the time domain back into the frequency domain. As a result, the apparatus provides a more computationally efficient STAR system.

Second example embodiments provide an apparatus for a beamforming-enabled simultaneous transmit and receive (STAR) system including a receiver configured, based on one or more received radio frequency (RF) signals, to provide one or more received baseband signals in a time domain that each includes a signal of interest and interference including an interference signal from one or more transmitters corresponding to the STAR system. Each interference signal is associated with an interference reference signal in the time domain. Interference cancellation circuitry is configured to convert the one or more received baseband signals in the time domain into one or more received baseband signals in a frequency domain, convert each interference reference signal in the time domain to an interference reference signal in the frequency domain, multiply each interference reference signal in the frequency domain with a corresponding set of frequency domain cancellation coefficients to provide interference cancellation signals in the frequency domain, and combine the one or more received baseband signals in the frequency domain with the interference cancellation signals in the frequency domain to remove each interference reference signal and provide one or more interference-compensated received baseband signals in the frequency domain. Beam processing circuitry is configured to multiply a corresponding set of beamforming coefficients with each interference-compensated received baseband signal in the frequency domain to provide a beam signal in the frequency domain, convert the beam signal in the frequency domain into a signal of interest in the time domain, and output the signal of interest in the time domain.

Advantageously for the second example embodiments, there is no need to convert the interference-compensated received baseband signals generated by interference cancellation circuitry in the frequency domain to the time domain before providing the interference-compensated received baseband signals to the beam processing circuitry. Instead, the frequency domain interference-compensated received baseband signals are provided to the beam processing circuitry with beam processing operations continuing in the frequency domain without the beam processing circuitry having to convert an interference-compensated received baseband signal in the time domain back into the frequency domain.

Third example embodiments provide a beamforming-enabled simultaneous transmit and receive (STAR) system that includes one or more transmitters and M receiving paths, where M is an integer greater than 1, receiving one or more received radio frequency (RF) signals. Each of the M receiving paths includes an antenna, amplifier circuitry, filtering circuitry, analog to digital conversion circuitry, and down conversion circuitry to provide one or more received baseband signals in a time domain that each includes a signal of interest and interference including an interference signal from the one or more transmitters. The system further includes an apparatus as described above and in the detailed description below for the first example embodiments.

Fourth example embodiments provide a beamforming-enabled simultaneous transmit and receive (STAR) system that includes one or more transmitters and M receiving paths, where M is an integer greater than 1, receiving one or more received radio frequency (RF) signals. Each of the M receiving paths includes an antenna, amplifier circuitry, filtering circuitry, analog to digital conversion circuitry, and down conversion circuitry to provide one or more received baseband signals in a time domain that each includes a signal of interest and interference including an interference signal from the one or more transmitters. The system further includes an apparatus as described and in the detailed description below for the second example embodiments.

This Summary is provided to introduce a selection of concepts that are further described below in the Detailed Description. This Summary is intended neither to identify key features or essential features of the claimed subject matter, nor to be used to limit the scope of the claimed subject matter; rather, this Summary is intended to provide an overview of the subject matter described in this document. Accordingly, it will be appreciated that the above-described features are merely examples, and that other features, aspects, and advantages of the subject matter described herein will become apparent from the following Detailed Description, Figures, and Claims.

### BRIEF DESCRIPTION OF THE FIGURES

These and other features and advantages will be better and more completely understood by referring to the following detailed description of example non-limiting illustrative embodiments in conjunction with the drawings. Unless specific dimensions are given in a figure, the figures are not necessarily to scale and are schematic representations.
Figure 1 shows an example embodiment of a beamforming-enabled simultaneous transmit and receive (STAR) system with SIC filtering using digital beamforming and cancellation.
Figure 2 shows example details for one of possibly multiple antenna receiver chains coupled to a beamforming and cancellation network in the STAR system of Figure 1.
Figure 3 shows an example of digital beamforming for a single beam in the frequency domain followed by single reference used in cancellation filter in the frequency domain indicated as filter 1 and beam 0 as well as a generalized example of beamforming in the frequency domain for multiple (K) beams followed by cancellation filter/subtraction in the time domain for multiple (L) reference/interference signals.
Figure 4 shows first example embodiments of an efficient architecture/apparatus for beamforming in the frequency domain followed by cancellation filtering/subtraction in the frequency domain for one beam and one reference/interference signal.
Figure 5 shows second example embodiments of an efficient architecture/apparatus for beamforming in the frequency domain for multiple (K) beams followed by cancellation filtering/subtraction in the frequency domain for multiple (L) reference/interference signals.
Figure 6 is a flowchart showing example procedures for operating the efficient architecture/apparatus according to the second example embodiments shown in Figure 6.
Figure 7 shows a generalized example for L reference/interference signals of a cancellation filter/subtraction providing outputs in the time domain to K beamformers that convert those time domain signals into the frequency domain to cancel interference in the beamforming processing in the frequency domain.
Figure 8 shows third and fourth example embodiments of an efficient architecture/apparatus including a cancellation filtering/subtraction stage to cancel interference followed by a beamforming stage.
Figure 9 is a flowchart showing example procedures for operating the efficient architecture/apparatus according to the fourth example embodiments shown in Figure 9.

### DETAILED DESCRIPTION

Specific embodiments are shown by way of example in the drawings and will herein be described in detail. It should be understood, however, that the drawings and detailed description are not intended to limit the claims to the particular embodiments disclosed, even where only a single embodiment is described with respect to a particular feature. On the contrary, the intention is to cover all modifications, equivalents and alternatives that would be apparent to a person skilled in the art having the benefit of this disclosure. Examples of features provided in the disclosure are intended to be illustrative rather than restrictive unless stated otherwise.

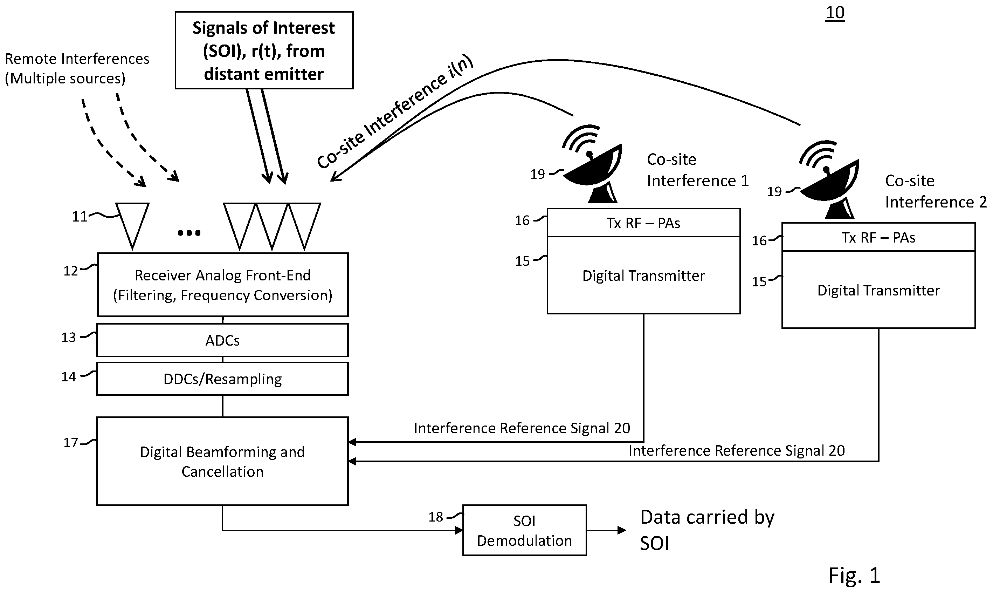

Figure 1 shows an example embodiment of a simultaneous transmit and receive (STAR) system 10 that includes a beamforming and cancellation network 17 using digital beamforming and cancellation. The STAR system 10 includes multiple (at least two) antennas (or antenna elements) 11 which receive radio frequency (RF) signals of interest (SOI) from one or more distant emitters to be processed to recover data contained in the SOI or processed to reflect a specific application. The antennas 11 receive interference signals from remote sources, one or more digital transmitters 16 which are a part of the STAR system 10, and noise. One or more transmitters 15 include RF circuitry 16 to frequency upconvert the digital transmission signals to RF which are then transmitted via the antennas 19. The transmitter(s) 15 and receiver 12 may be physically co-located and operate in the same frequency band. Alternatively, one or more transmitters 15 may be "remote," i.e., in different location(s) from the receiver 12 such as a distant jammer, in which case, the receiver would not have access to an interference reference signal associated with such a remote transmitter 15. Regardless of the physical distance between the transmitter(s) 15 and receiver antennas 11, the receiver 12 has access to/is provided with a representation of each transmit signal (shown as reference signal(s) 20 in Figure 1).

The interference from the transmitter(s) 15 is labeled as co-site interference and interferes, along with the remote interference, with the SOI. Together, these signals form the received signals that are processed in an analog "front end" 12. The analog front end filters and optionally frequency downconverts the signals to produce an intermediate frequency (IF). The IF signals are converted into digital format using one or more analog to digital converters (ADCs) 13. The digitized signals are filtered and shifted from that intermediate frequency to baseband and resampled at a digital down converter (DDC) 14 to reduce the sample rate and to improve the signal to noise ratio and the dynamic range of the recovered signal. Note that if direct digital sampling is used, RF frequency downconversion need not be used. The digital baseband signal is processed in a digital beamforming and interference cancellation circuitry 17 using one or more reference signals, corresponding to the transmitter signals from STAR transmitters 15. Details of that beamforming and interference cancellation are described below. The output signals from the digital beamforming and interference cancellation circuitry 17 ideally correspond to the SOI (the interference having been cancelled or significantly reduced), and the SOI are demodulated at 18 to recover the desired data.

The digital beamforming and cancellation circuitry 17 may include one or more hardware processors and one or more memory devices. In some embodiments, each or any of the processors is or includes, for example, a single- or multi-core processor, a microprocessor (e.g., which may be referred to as a central processing unit or CPU), a graphics processing unit (GPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). A processor may use an instruction set architecture such as x86 or Advanced RISC Machine (ARM). A memory device may include a random access memory (RAM), a flash memory, a hard disk, a magnetooptical medium, an optical medium, cache memory, a register, or other type of device that performs the volatile or non-volatile storage of data and/or instructions. Memory devices are examples of non-transitory computer-readable storage media. For example, some of the processing operations, like fast Fourier transforms (FFTs) and inverse FFTs (IFFTs) used for digital beamforming and cancellation, may be performed more efficiently using one or more FPGAs and/or ASICs, while other processing operations may be performed using one or more microprocessors, and/or while other processing operations are performed by discrete hardware circuits. However, these are just examples. Other examples may implement all of the processing operations using one or more microprocessors.

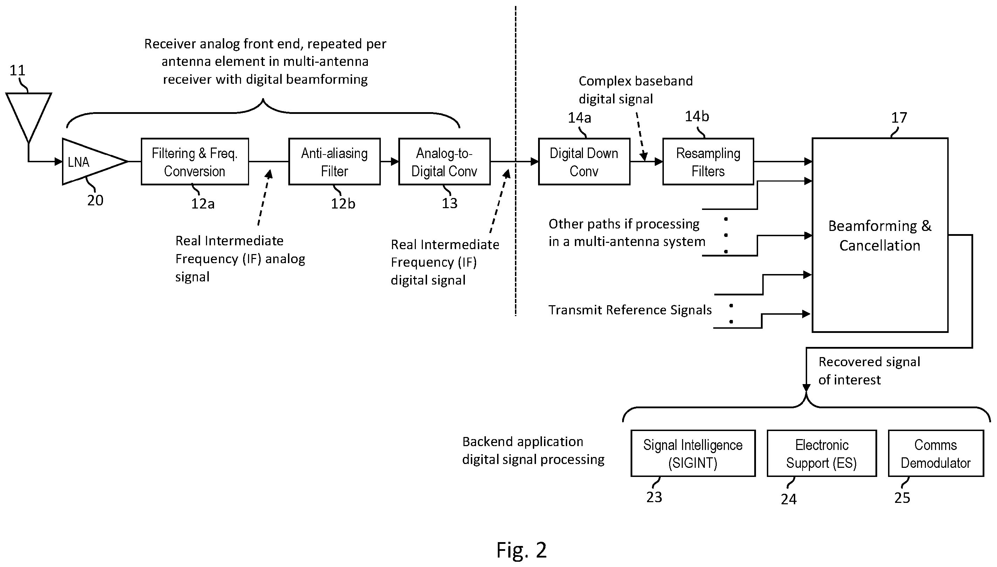

Figure 2 shows example details for one of multiple antenna receiver chains coupled to the beamforming and cancellation circuitry 17 in the STAR system 10 of Figure 1. An antenna 11 provides a received radio frequency signal to a low noise amplifier (LNA) 20 that amplifies the received RF signal which is then filtered and frequency converted at 12a to produce an intermediate frequency (IF) analog signal. The IF analog signal is further filtered by anti-aliasing filter 12b before sampling to restrict the bandwidth of the signal to satisfy the Nyquist-Shannon sampling theorem over the frequency band of interest. The bandwidth-restricted IF signal is converted from analog form to digital form in the analog to digital converter ADC 13. The IF digital signal is processed by the digital down converter 14a to generate a complex baseband digital signal which is then resampled by resampling filter(s) 14b to provide the complex baseband digital signal to the beamforming and cancellation circuitry 17. Similar additional receiver chains from other antennas 11 are also input to the beamforming cancellation circuitry 17 as indicated by the arrows. The output from the beamforming and cancellation circuitry 17 is a recovered SOI which may be provided to various backend digital signal processing applications. Examples of digital signal processing applications include a signal intelligence application 23, an electronic support application 24, and a communications demodulation application 25.

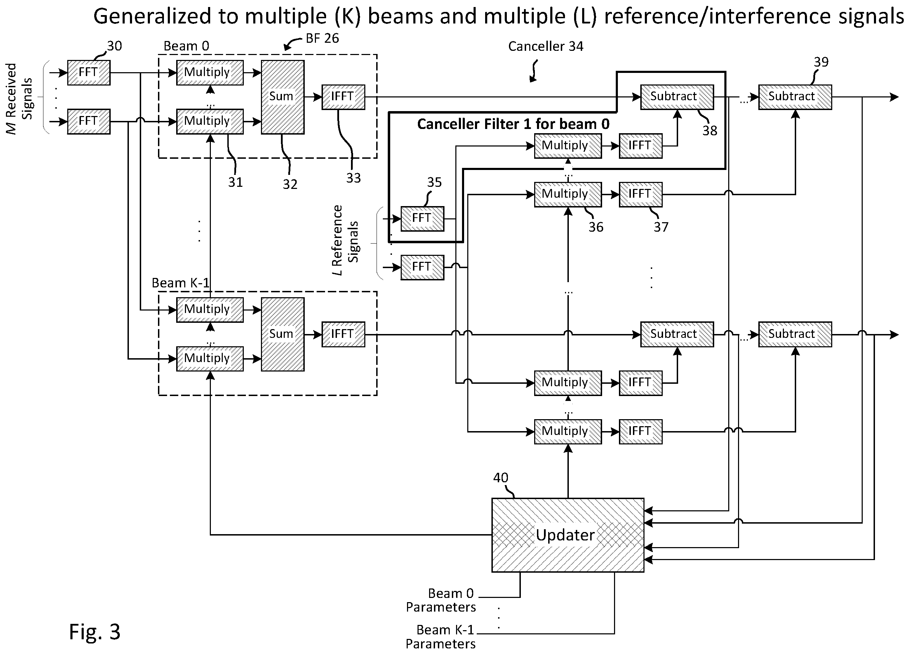

Figure 3 shows an example of digital beamforming for a single beam in the frequency domain followed by single reference used in cancellation filter in the frequency domain, indicated as filter 1 and beam 0, as well as a generalized example of beamforming in the frequency domain for multiple (K) beams followed by cancellation filter/subtraction in the frequency domain for multiple (L) reference/interference signals. Figure 3 shows an example of digital beamforming circuitry 26 ("beamformer") in the frequency domain followed by reference signals used in cancellation filter/subtraction circuitry 34 ("canceller filter") in the frequency domain.

Beamforming is a signal processing technique for directional signal transmission or reception which is achieved by combining antenna signals received or transmitted in such a way that signals at particular angles experience constructive interference while others experience destructive interference. To change the directionality of a beam (azimuth and elevation) when transmitting, a beamformer controls the phase and relative amplitude of the signal at each transmitter, in order to create a pattern of constructive and destructive interference in the wavefront. When receiving, information from different antennas is combined in a way where the expected pattern ("form") of radiation is preferentially observed.

Each beamformer includes M N-point fast Fourier transforms (FFTs) 30, where M is an integer corresponding to M antennas 11 shown in Figure 1. FFTs efficiently transform time domain signals into the frequency domain, but Discrete Fourier transforms (DFTs) may also be used. In this application, a time domain signal and a frequency domain signal are two representations of the same information. The term "time domain signal" refers to a time sequence of signal samples at a particular sample rate and center frequency. The term "frequency domain signal" refers to the decomposition of a time domain signal in frequency comprising multiple time domain signals with reduced bandwidth and sample rate and offset in frequency.

Each N-point FFT 30 generates N output signals corresponding to N "points" or frequency intervals sometimes called frequency "bins." Frequency bins are intervals between samples in frequency domain. For example, if a sample rate is 100 Hz and an FFT size is 100, i.e., N=100, then there are 100 points between 0-100 Hz. In other words, the 100 Hz range is divided into 100 intervals, like 0-1 Hz, 1-2 Hz, etc.

Each of the N point signals of each FFT 30 is multiplied in a respective complex multiplier 31 by a corresponding one of M weights (w), which are sometimes also referred to as coefficients or taps. There is one weight per frequency bin or "point" and per antenna element, and there are *i* increments from 0 to M - 1, *j* increments from 0 to N - 1. The complex products from each of the complex multipliers 31 are provided to corresponding one of N summers 32, where complex additions are performed. The N complex sums are provided to an N point inverse FFT (IFFT) 33 to generate a beam signal output in the time domain. The beamformer 26 in a single beam example provides a single beam 0 that is provided to a subtractor 38 to have interference canceled or reduced.

A frequency domain canceller filter 34 receives a time domain complex reference signal from a transmitted signal transmitted from one of the transmitters 16 in the STAR system 10. That time domain complex reference signal is transformed in an N point FFT 35 from the time domain into the frequency domain to generate N outputs which are supplied to N corresponding complex multipliers 36 which multiply the FFT output by a respective filter tap *h,* there being N taps *h₀* to *h*_{N-1}. The filtered outputs are converted back into the time domain by using an N-point IFFT 37 to provide a time domain interference cancellation signal to the subtractor 38. The subtractor 38 removes or at least reduces the interference corresponding to the reference signal from the output beam signal to output an interference-cancelled beam signal in the time domain.

Figure 3 shows an example implementation where an update processor 40 controls operation of both the beamformer 26 and interference canceller 34. Each of the beamformer 26 and the canceller filter 34 may have its own update processor if desired.

The inventors noticed that in the architecture of Figure 3, the beamformer 26 and the canceller filter 34 each processes signals in the frequency domain after performing N-point FFTs and then converts their respective outputs back into the time domain using N-point IFFTs before the interference cancellation occurs in the time domain. The inventors recognized FFT and IFFT operations are "costly" in terms of processing resources and that there is inefficiency in an architecture like that in Figure 3 that converts back and forth between the different domains. They also realized that this inefficiency greatly increases as the beamformer 26 and interference canceller filter 34 are scaled to handle multiple K beams, where K is a positive integer, and multiple L interference reference signals, where L is a positive integer.

Figure 3 also shows a generalized example of beamforming M received antenna signals in the frequency domain for multiple (K) beams followed by cancellation filter/subtraction in the frequency domain for multiple (L) interference reference signals. The update processor 40 receives beam parameters for each beam 0 to K-1 and determines the appropriate weights or coefficients w applied to the FFT 30 outputs. However, the inventors observed that this architecture is even more wasteful and limited in performance than the single beam single reference signal system of Figure 3. This wastefulness becomes exponentially larger as the number of elements in the array (M), the number of interferers (L), and the number of formed beams (K) increase. As can be seen in Figure 3, for K beams, K IFFTs 33 are performed in beamformer 26 and L IFFTs are performed in interference canceller filter 34 which require extensive signal processing resources and time. The inventors solved these problems with a more efficient architectural approach.

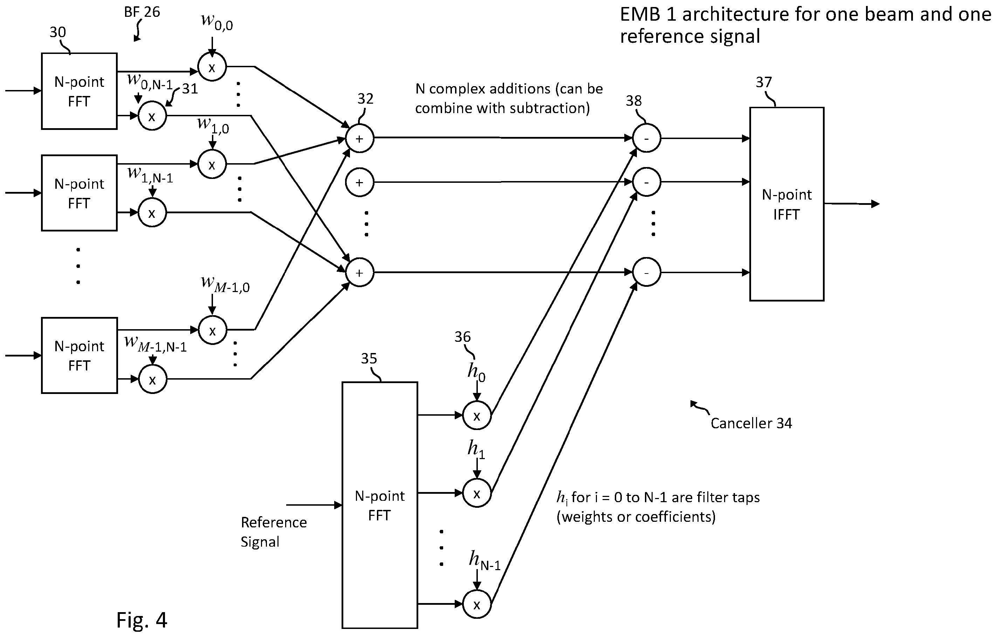

Figure 4 shows a first example embodiment of an efficient architecture/apparatus for beamforming in the frequency domain followed by cancellation filter/subtraction in the frequency domain for one beam and one reference/interference signal. As in Figure 3, the beamforming circuitry 26 includes M N-point fast Fourier transforms (FFTs) 30, where M is an integer corresponding to M antennas 11. Each of the N point signals of each FFT 30 is multiplied in a respective complex multiplier 31 by a corresponding one of M weights (w), which are sometimes also referred to as coefficients or taps. The update processor 40 may, for example, determine the beamforming coefficients using one of: a joint calculation beamforming algorithm, a separated beamforming algorithm, a linearly constrained minimum variance (LCMV) beamforming algorithm, a least mean square (LMS) beamforming algorithm, or a minimum mean square error (MMSE) beamforming algorithm. Other suitable beamforming algorithms may be used. The complex products from each of the complex multipliers 31 are provided to corresponding one of N summers 32, where complex additions are performed to produce N complex sums. In contrast to Figure 3, however, the N complex sums are provided to subtractor 38 without performing an N point IFFT to generate a beam signal output in the time domain.

A frequency domain canceller filter 34 receives a time domain reference signal from a transmitted signal transmitted from one of the transmitters 15 in the STAR system 10. That time domain complex reference signal is transformed in an N point FFT 35 from the time domain into the frequency domain to generate N outputs which are supplied to N corresponding complex multipliers 36 which multiply each FFT output by a respective filter tap from *h₀* to *h*_{*N-*1} corresponding to frequency domain cancellation coefficients. The update processor 40 may, for example, determine the cancellation coefficients (1) as part of a joint-calculation with the beamforming algorithm or (2) using a separate cancellation algorithm such as a least means square (LMS) adaptive algorithm, or a minimum mean squared error (MMSE) algorithm. Other suitable techniques for determining the cancellation coefficients may be used.

Unlike in Figure 3, the filtered outputs are not converted back into the time domain by using an N-point IFFT. Instead, the filtered outputs are provided in the frequency domain to the subtractor 38. The subtractor 38 subtracts the interference from the output beam signal from the beam signal-in the frequency domain-to output an interference-canceled beam signal. The conversions back into the time domain in both the beamformer 26 and the interference canceller filter 34 are eliminated and there is simply the single N-point IFFT 37 that converts the interference-canceled beam signal into the time domain corresponding to a SOI for further processing by the STAR system 10. By eliminating these unnecessary IFFT operations, the beamforming and interference cancellation circuitry 17 performs more efficiently (fewer operations) and with higher performance (faster because of fewer operations).

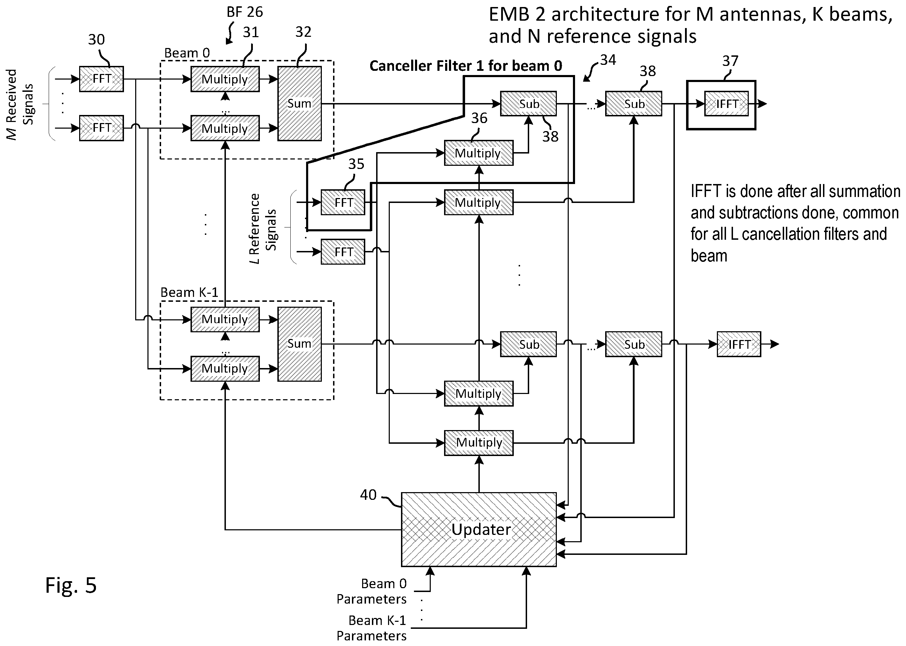

Figure 5 shows second example embodiments of an efficient architecture/apparatus for beamforming in the frequency domain for multiple (K) beams followed by cancellation filter/subtraction in the frequency domain for multiple (L) reference/interference signals. The beamformer 26 converts M received baseband signals in the time domain into M received baseband signals in the frequency domain via respective FFT 30, and for each of K beams, multiplies via respective complex multiplier 31 a corresponding beamforming coefficient with each received baseband signal in the frequency domain to provide a corresponding one of K beam signals in the frequency domain. The complex products are summed for each beam in a corresponding summer 32 and the K beams are provided to the interference canceller filter 34.

Interference canceller filter 34 converts each of L interference reference signals in the time domain to an interference reference signal in the frequency domain via a respective FFT 35 and multiplies at corresponding complex multipliers 36 each interference reference signal in the frequency domain with a corresponding set of frequency domain interference cancellation coefficients to provide a corresponding interference cancellation signal in the frequency domain. The interference canceller filter 34 then combines at a respective subtractor 38 each of the K beam signals in the frequency domain with each of L interference cancellation signals in the frequency domain to remove or reduce each interference signal and ultimately provide K signals of interests in the frequency domain. The K signals of interest in the frequency domain are then converted into K signals of interest in the time domain corresponding to the K beam signals via respective N-point IFFTs 37, and the K signals of interest in the time domain are output for further processing.

In the embodiments of Figure 5, the number of unnecessary IFFTs is even more dramatically reduced in the multiple beam and multiple interference reference signal context than in the single beam and single interference reference signal context.

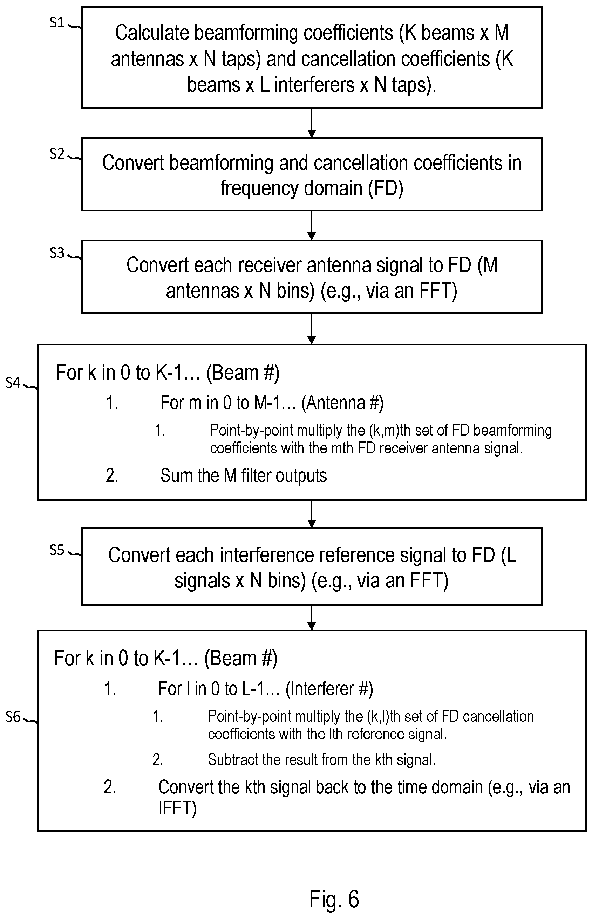

Figure 6 is a flowchart showing example procedures for operating the efficient architecture/apparatus according to the second example embodiments shown in Figure 5.

In step S1, the updater 40 calculates beamforming coefficients (K beams x M antennas x N taps) and cancellation coefficients (K beams x L interferers x N taps). In step S2, the beamforming and cancellation coefficients are calculated in the frequency domain, and in step S3, each receiver antenna signal is converted to the frequency domain (M antennas x N frequency bins) via an FFT. Then, in step S4, for beam k in 0 to K-1 beams, two operations are performed. First, for the m^{th} antenna signal in 0 to M-1 antenna signals, the beamforming circuitry 26 point-by-point multiplies the (k,m)^{th} set of frequency domain beamforming coefficients with the m^{th} frequency domain receiver antenna signal. Second, after the above first operation is complete, the M filter outputs are summed. The operations in step S4 continue until the K-1^{th} beam is processed. In step S5, the interference canceller filter 34 converts each interference reference signal to the frequency domain (L signals x N bins) via an FFT. In step S6, for the k^{th} beam signal in 0 to K-1 beam signals, the interference canceller filter 34 performs two operations. First, for the l^{th} interference reference signal in 0 to L-1 interference reference signals, the interference canceller filter 34 point-by-point multiplies the (k,l)^{th} set of frequency domain cancellation coefficients with the l^{th} interference reference signal and subtracts the result from the k^{th} signal. After this first operation completes for the last L-1 interference reference signal, the second operation then converts the k^{th} signal back to the time domain via an IFFT. The operations in step S6 continue until the K-1^{th} beam is processed.

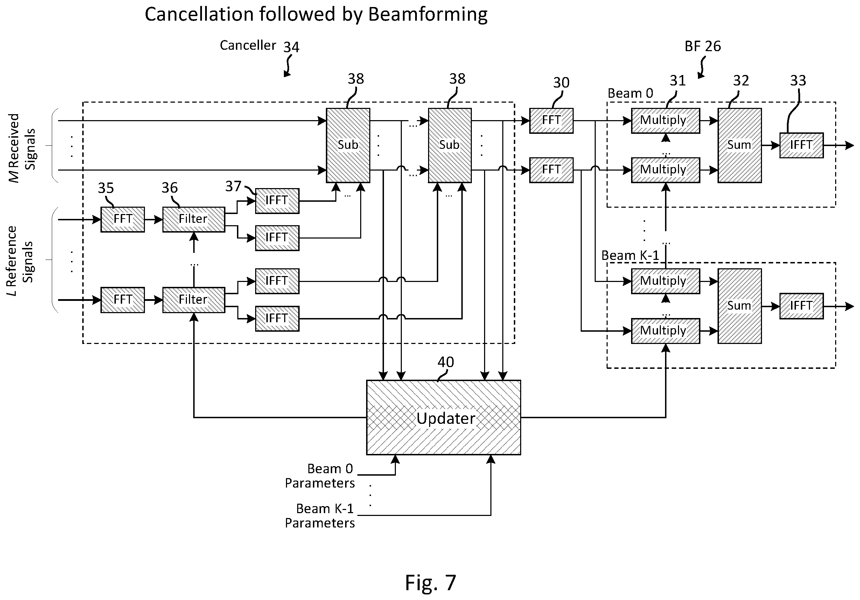

Figure 7 shows an example where interference cancellation 34 is performed prior to beamforming 26. In some applications, performing interference cancellation 34 is performed prior to beamforming may be preferred because somewhat better interference cancellation may be achieved in this configuration but possibly with increased size and/or cost as compared to the beamformer - canceller filter configuration in Figure 3. L reference signals in the time domain are converted in FFTs 35 and filtered in filters 35 using filter weights provided by updater 40. The filtered reference signals are converted back into the time domain and combined with a corresponding one of M received signals in a corresponding subtractor 38 to provide interference cancelled or reduced signals in the time domain. The beamformer 26 performs M FFTs on the interference cancelled or reduced signals from the canceller filter 34 to transform those signals into the frequency domain which are then processed using the multipliers 31 and summers 32 for each beam 0 to K-1 provide K beam signals in the frequency domain. The K beam signals are transformed into time domain signals in K IFFTs 33. However, the architecture in Figure 7 also suffers from the inefficiencies discussed above caused by converting back and forth between time and frequency domains at both the canceller filter 34 and the beamformer 26. There are two sets of FFTs 35 and 30 and two sets of IFFTs 37 and 33 which is wasteful and inefficient.

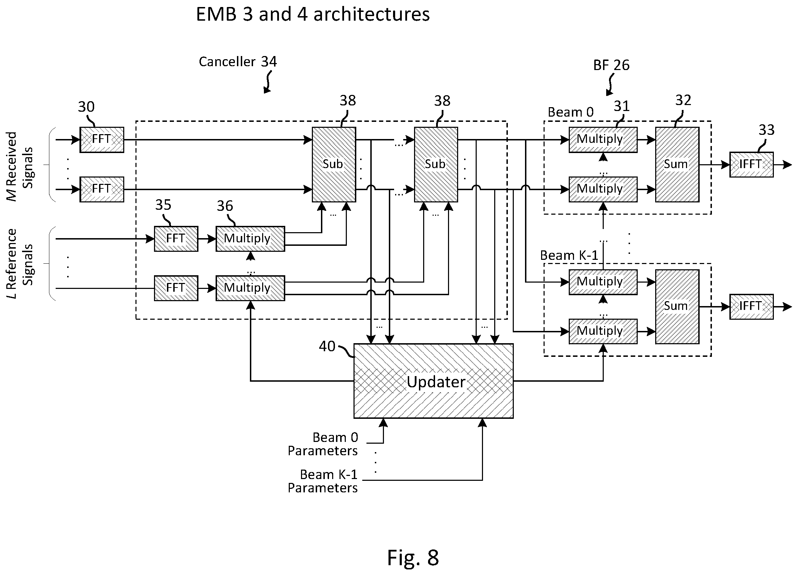

Figure 8 shows third and fourth example embodiments of an efficient architecture/apparatus including a cancellation filter/subtraction stage for providing outputs in the frequency domain for L reference/interference signals to K beamformers to cancel interference in the beamforming processing in the frequency domain. The third example embodiment includes a single reference signal canceller 34 and a single beamformer 26. The fourth example embodiment includes a reference signal canceller 34 that cancels L reference from M received signals and K beamformers 26.

Each of the M received signals is transformed into the frequency domain by a corresponding FFT 30, and each of the L reference signals (where "each" includes one L= 1 reference signal in the third example embodiment as well as when there are L>1 reference signals in the fourth example embodiment) is also transformed into the by a corresponding FFT 35. The L reference signal(s) output by the FFT(s) 35 is/are filtered in a corresponding multiplier 36 with filter weights w provided by the updater 40. The filtered output(s) from the multiplier(s) 36 are combined with respective received signals in a corresponding subtractor 38 to provide M interference cancelled received signals in the frequency domain to beamformer 26. Each of the K beamformers (where "each" includes one K= 1 beamformer in the third example embodiment as well as when there are K>1 beamformers in the fourth example embodiment) complex multiplies the M interference cancelled received signals with corresponding beam coefficients provided by the updater 40. The complex products for each beam are summed in M summers 32 and each sum is converted back into the time domain by a corresponding IFFT 33. The output(s) from IFFT(s) 33 is/are the K beam(s) including the received signals of interest. Similar to the advantages with the first and second embodiments, the third and fourth embodiments of Figure 8 eliminate the transform conversions back and forth between time and frequency domains used in Figure 7, and only one set of FFTs at the beginning and one set of IFFTs at the end is needed in Figure 8 where the term "set" includes 1 or more.

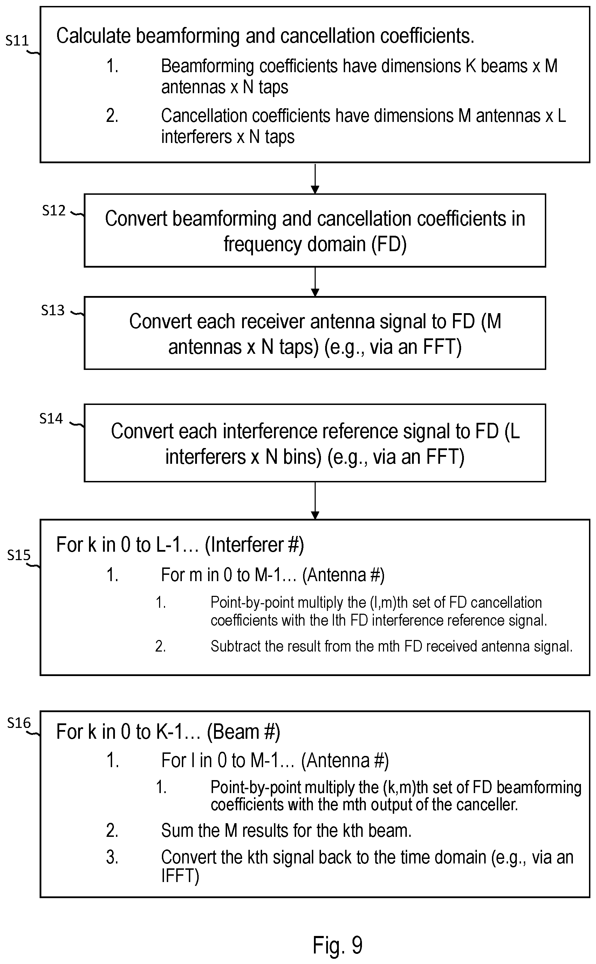

Figure 9 is a flowchart showing example procedures for operating the efficient architecture/apparatus according to the fourth example embodiments shown in Figure 8. In step S11, the updater 40 calculates beamforming coefficients (K beams x M antennas x N taps) and cancellation coefficients (K beams x L interferers x N taps). In step S12, the beamforming and cancellation coefficients are converted to the frequency domain, and in steps S13 and S14, the interference cancellation circuitry 34 converts each receiver antenna signal into the frequency domain (M antennas x N bins or points) via an FFT and converts each interference reference signal into the frequency domain (L interferers x N bins or points) via an FFT. In step S15, for the l^{th} interference reference signal in 0 to L-1 interference reference signals, the interference cancellation circuitry 34 performs two operations. First, for the m^{th} antenna signal for 0 to M-1 antennas, the interference cancellation circuitry 34 point-by-point multiplies the (l,m)^{th} set of frequency domain cancellation coefficients with the l^{th} frequency domain interference reference signal and then subtracts the result from the m^{th} frequency domain received antenna signal. These two operations continue for all antenna signals, i.e., until m=M-1, and the two operations continue for all the interference reference signals until l=L-1. Step S16 includes three operations for each beam k in 0 to K-1. First, for m in 0 to M-1 antennas, the interference cancellation circuitry 34 point-by-point multiplies the (k,m)^{th} set of frequency domain beamforming coefficients with the m^{th} frequency domain receiver antenna signal until the last antenna signal M-1 is processed. The second operation then sums the M filter outputs for the k" beam. The third operation converts the kth signal back to the time domain via an IFFT. These three operations continue until the last beam K-1 is processed.

### EXAMPLE ADVANTAGES AND APPLICATIONS

Example advantages of the technology described above include increased efficiency (reduced latency, reduced computational resources, less power, less heat needing dissipation) and decreased complexity in beamforming and interference cancellation circuitry. For example, the example embodiments of the apparatus described above each provide a more computationally efficient STAR system. In addition to STAR systems, these advantages also apply to any other systems that perform beamforming and interference cancellation.

Example applications of the technology described above include any STAR application such as high-speed telecommunication networks, wireless communications, radar systems, defense applications, aerospace communications, radio broadcasting, and data centers that require intensive data transmission.

Although various embodiments have been shown and described in detail, the claims are not limited to any particular embodiment or example. None of the above description should be read as implying that any particular element, step, range, or function is essential. All structural and functional equivalents to the elements of the above-described embodiments that are known to those of ordinary skill in the art are expressly incorporated herein by reference and are intended to be encompassed. Features of the embodiments described above may be combined unless clearly technically impossible. Moreover, it is not necessary for a device or method to address each and every problem sought to be solved by the present invention, for it to be encompassed by the invention. No embodiment, feature, element, component, or step in this document is intended to be dedicated to the public.

Terms, such as first, second, and the like, may be used to describe various components. Each of these terminologies is not used to define an essence, order or sequence of a corresponding component but used merely to distinguish the corresponding component from other component(s). For example, a "first" component may be referred to as a "second" component, and similarly, the "second" component may be referred to as the "first" component. "Based on" as used herein covers based at least on. As used throughout this application, the word "may" is used in a permissive sense (i.e., meaning having the potential to), rather than the mandatory sense (i.e., meaning must). The singular forms "a", "an", and "the" are intended to include the plural forms as well, unless the context clearly indicates otherwise. It will be further understood that the terms "comprises/comprising" and/or "includes/including" when used herein, specify the presence of stated features, steps, operations, elements, and/or components, but do not preclude the presence or addition of one or more other features, integers, steps, operations, elements, components and/or groups thereof.

The same name may be used to describe an element included in the embodiments described above and an element having a common function. Once a component or function is described for one embodiment, that description is not repeated for other embodiments where that component or function operates or performs similarly. Unless disclosed to the contrary, a configuration of components disclosed in any embodiment may be applied to other embodiments, and the specific description of the repeated configuration will be omitted.

Unless otherwise defined, all terms used herein including technical or scientific terms have the same meaning as commonly understood by one of ordinary skill in the art to which an example belongs. Terms, such as those defined in commonly used dictionaries, are to be interpreted as having a meaning that is consistent with their meaning in the context of the relevant art and are not to be interpreted in an idealized or overly formal sense unless expressly so defined herein.

The term "about" or "approximately" means an acceptable error for a particular recited value, which depends in part on how the value is measured or determined. In certain embodiments, "about" can mean one or more standard deviations. When the antecedent term "about" is applied to a recited range or value it denotes an approximation within the deviation in the range or value known or expected in the art from the measurement's method. For removal of doubt, it is understood that any range stated herein that does not specifically recite the term "about" before the range or before any value within the stated range inherently includes such term to encompass the approximation within the deviation noted above.

## Claims

1. An apparatus for a beamforming-enabled simultaneous transmit and receive (STAR) system, comprising:
a receiver configured, based on one or more received radio frequency (RF) signals, to provide one or more received baseband signals in a time domain that each includes a signal of interest and interference including an interference signal from one or more transmitters corresponding to the STAR system, wherein each interference signal is associated with an interference reference signal in the time domain;
beam processing circuitry configured to:
convert the one or more received baseband signals in the time domain into one or more received baseband signals in a frequency domain, and
generate a beam signal in the frequency domain by multiplying a corresponding set of beamforming coefficients with each received baseband signal in the frequency domain and adding products of the multiplications; and
interference cancellation circuitry configured to:
convert each interference reference signal in the time domain to an interference reference signal in the frequency domain;
generate an interference cancellation signal in the frequency domain by multiplying each interference reference signal in the frequency domain with a corresponding set of frequency domain cancellation coefficients;
combine the beam signal in the frequency domain with each interference cancellation signal in the frequency domain to remove each interference signal and provide a signal of interest in the frequency domain;
convert the signal of interest in the frequency domain into a signal of interest in the time domain corresponding to the beam signal; and
output the signal of interest in the time domain.

2. The apparatus in claim 1, wherein:
the received baseband signal in the time domain and the received baseband signal in the frequency domain are complex digital signals,
the beam processing circuitry is configured to convert the received baseband signal in the time domain into the received baseband signal in the frequency domain using fast Fourier transform operations, and
the interference cancellation circuitry is configured to convert each interference reference signal in the time domain to an interference reference signal in the frequency domain using fast Fourier transform (FFT) operations.

3. The apparatus in claim 2, wherein the interference cancellation circuitry is configured to convert the signal of interest in the frequency domain into the signal of interest in the time domain using inverse fast Fourier transform (IFFT) operations.

4. The apparatus in claim 3, wherein the beam processing circuitry is configured to:
process each of M received complex baseband signals using an N-point FFT to produce N complex outputs, where M and N are positive integers and M corresponds to a number of receiver antenna elements;
multiply each complex output by a corresponding one of N beamforming weights to generate a weighted product; and
sum corresponding weighted products to produce N complex sums.

5. The apparatus in claim 4, wherein the interference cancellation circuitry is configured to:
process each reference interference signal using an N-point FFT to produce N complex interference outputs;
multiply one of frequency domain cancellation coefficients with a corresponding N complex interference output in the frequency domain to provide N interference cancellation signals in the frequency domain;
combine the N complex sums in the frequency domain with corresponding ones of the N interference cancellation signals in the frequency domain to remove reference signal interference and provide N canceled signals in the frequency domain.

6. The apparatus in claim 5, wherein the interference cancellation circuitry is configured to convert the N canceled signals using an N-point IFFT to produce the signal of interest in the time domain for the beam signal.

7. The apparatus in claim 1, wherein the beam processing circuitry is configured to:
convert M received baseband signals in the time domain into M received baseband signals in the frequency domain, where M is an integer greater than 1;
for each of K beams, where K is a positive integer, multiply a corresponding set of beamforming coefficients with each received baseband signal in the frequency domain to provide a corresponding one of K beam signals in the frequency domain; and
the interference cancellation circuitry is configured to:
convert each of L interference reference signals in the time domain to an interference reference signal in the frequency domain, where L is a positive integer;
multiply each interference reference signal in the frequency domain with a corresponding one of frequency domain interference cancellation coefficients to provide a corresponding interference cancellation signal in the frequency domain;
combine each of the K beam signals in the frequency domain with each of L interference cancellation signals in the frequency domain to remove each interference signal and provide K signals of interests in the frequency domain;
convert the K signals of interest in the frequency domain into K signals of interest in the time domain corresponding to the K beam signals; and
output the K signals of interest in the time domain; and/or
wherein the beam processing circuitry is configured to determine the beamforming coefficients using one of: a joint calculation beamforming algorithm, a separated beamforming algorithm, a linearly constrained minimum variance (LCMV) beamforming algorithm, a least mean square (LMS) beamforming algorithm, or a minimum mean square error (MMSE) beamforming algorithm, and
wherein the beamforming coefficients have dimensions of K beams x M antenna elements x N coefficient taps, where K, M, and N are positive integers; and/or wherein the interference cancellation circuitry is configured to determine the cancellation coefficients as part of a joint-calculation with the beamforming algorithm or using a separate cancellation algorithm such as a least means square (LMS) adaptive algorithm, or a minimum mean squared error (MMSE) algorithm, and
wherein the cancellation coefficients have dimensions of K beams x M antenna elements x N coefficient taps, where K, M, and N are positive integers.

8. Apparatus for a beamforming-enabled simultaneous transmit and receive (STAR) system, comprising:
a receiver configured, based on one or more received radio frequency (RF) signals, to provide one or more received baseband signals in a time domain that each includes a signal of interest and interference including an interference signal from one or more transmitters corresponding to the STAR system, wherein each interference signal is associated with an interference reference signal in the time domain, and
interference cancellation circuitry configured to:
convert the one or more received baseband signals in the time domain into one or more received baseband signals in a frequency domain;
convert each interference reference signal in the time domain to an interference reference signal in the frequency domain;
multiply each interference reference signal in the frequency domain with a corresponding set of frequency domain cancellation coefficients to provide interference cancellation signals in the frequency domain;
combine the one or more received baseband signals in the frequency domain with the interference cancellation signals in the frequency domain to remove each interference reference signal and provide one or more interference-compensated received baseband signals in the frequency domain;
beam processing circuitry configured to:
multiply a corresponding set of beamforming coefficients with each interference-compensated received baseband signal in the frequency domain to provide a beam signal in the frequency domain;
convert the beam signal in the frequency domain into a signal of interest in the time domain; and
output the signal of interest in the time domain.

9. The apparatus in claim 8, wherein:
the received baseband signal in the time domain and the received baseband signal in the frequency domain are complex digital signals,
the beam processing circuitry is configured to convert the one or more received baseband signals in the time domain into one or more received baseband signals in the frequency domain and using fast Fourier transform operations, and
the interference cancellation circuitry is configured to convert the one or more received baseband signals in the time domain into one or more received baseband signals in the frequency domain and each interference reference signal in the time domain to an interference reference signal in the frequency domain using fast Fourier transform (FFT) operations.

10. The apparatus in claim 9, wherein the beam processing circuitry is configured to convert the beam signal in the frequency domain into the signal of interest in the time domain using inverse fast Fourier transform (IFFT) operations.

11. The apparatus in claim 10, wherein the interference cancellation circuitry is configured to:
process each of M received complex baseband signals using an N-point FFT to produce N complex outputs for the received complex baseband signal in the frequency domain, where M and N are positive integers and M corresponds to a number of receiver antenna elements;
process each reference interference signal using an N-point FFT to produce N complex interference outputs;
multiply one of frequency domain cancellation coefficients with a corresponding N complex interference output in the frequency domain to provide N interference cancellation signals in the frequency domain;
combine the N interference cancellation signals in the frequency domain with the N complex outputs for the received complex baseband signal in the frequency domain to remove reference signal interference and provide N interference compensated signals in the frequency domain.

12. The apparatus in claim 11, wherein the beam processing circuitry is configured to:
multiply each N interference compensated signals in the frequency domain by a corresponding one of N beamforming weights to generate a weighted product;
sum corresponding weighted products to produce N complex sums; and
convert the N complex sums using an N-point IFFT to produce the signal of interest in the time domain for the beam signal.

13. The apparatus in claim 8, wherein the interference cancellation circuitry is configured to:
convert M received baseband signals in the time domain into M received baseband signals in the frequency domain, where M is a positive integer;
convert each of L interference reference signals in the time domain to an interference reference signal in the frequency domain, where L is a positive integer;
multiply each interference reference signal in the frequency domain with a corresponding set of frequency domain interference cancellation coefficients to provide a corresponding interference cancellation signal in the frequency domain;
combine each of the M received baseband signals in the frequency domain with each of L interference cancellation signals in the frequency domain to remove each interference signal and provide interference-compensated received baseband signals in the frequency domain; and
wherein the beam processing circuitry is configured to:
for each of K beams, where K is a positive integer, multiply a corresponding set of beamforming coefficients with each interference-compensated received baseband signal in the frequency domain to provide corresponding weighted products in the frequency domain; and
for each of the K beams, sum the corresponding weighted products to produce N complex sums in the frequency domain;
for each of the K beams, convert the N complex sums in the frequency domain using an N-point IFFT to produce K signal of interests in the time domain; and/or wherein the beam processing circuitry is configured to determine the beamforming coefficients using one of: a joint calculation beamforming algorithm, a separated beamforming algorithm, a linearly constrained minimum variance (LCMV) beamforming algorithm, a least mean square (LMS) beamforming algorithm, or a minimum mean square error (MMSE) beamforming algorithm, and
wherein the beamforming coefficients have dimensions of K beams x M antenna elements x N coefficient taps, where K, M, and N are positive integers; and/or wherein the interference cancellation circuitry is configured to determine the cancellation coefficients as part of a joint-calculation with the beamforming algorithm or using a separate cancellation algorithm such as a least means square (LMS) adaptive algorithm, or a minimum mean squared error (MMSE) algorithm, and
wherein the cancellation coefficients have dimensions of K beams x M antenna elements x N coefficient taps, where K, M, and N are positive integers.

14. A beamforming-enabled simultaneous transmit and receive (STAR) system, comprising:
one or more transmitters;
M receiving paths, where M is an integer greater than 1, receiving one or more received radio frequency (RF) signals, each of the M receiving paths including an antenna, amplifier circuitry, filtering circuitry, analog to digital conversion circuitry, and down conversion circuitry to provide one or more received baseband signals in a time domain that each includes a signal of interest and interference including an interference signal from the one or more transmitters; and
an apparatus according to claim 1.

15. A beamforming-enabled simultaneous transmit and receive (STAR) system, comprising:
one or more transmitters;
M receiving paths, where M is an integer greater than 1, receiving one or more received radio frequency (RF) signals, each of the M receiving paths including an antenna, amplifier circuitry, filtering circuitry, analog to digital conversion circuitry, and down conversion circuitry to provide one or more received baseband signals in a time domain that each includes a signal of interest and interference including an interference signal from the one or more transmitters; and
an apparatus according to claim 10.
